# EUROPEAN PATENT SPECIFICATION

(11) **EP 3 955 244 B1**
(45) Date of publication and mention of the grant of the patent: **11.03.2026**
(21) Application number: 20900757.4
(22) Date of filing: 16.10.2020
(51) Int. Cl.: G10L 15/22, G10L 15/18, G10L 15/30, G06F 3/16

(54) **SPEECH CONTROL METHOD, INFORMATION PROCESSING METHOD, VEHICLE, AND SERVER**
SPRACHSTEUERUNGSVERFAHREN, INFORMATIONSVERARBEITUNGSVERFAHREN, FAHRZEUG UND SERVER
PROCÉDÉ DE COMMANDE VOCALE, PROCÉDÉ DE TRAITEMENT D'INFORMATIONS, VÉHICULE ET SERVEUR

(30) Priority: 28.06.2020 CN 202010599637
(43) Date of publication of application: 16.02.2022
(73) Proprietor: Guangdong Xiaopeng Motors Technology Co., Ltd., Sino-Singapore Knowledge City, Huangpu District Guangzhou, Guangdong 510555 (CN)
(72) Inventor: YI, Hui, Guangzhou, Guangdong 510555 (CN); BAO, Pengli, Guangzhou, Guangdong 510555 (CN); SUN, Fangxun, Guangzhou, Guangdong 510555 (CN); WENG, Zhiwei, Guangzhou, Guangdong 510555 (CN); MA, Hongbo, Guangzhou, Guangdong 510555 (CN)
(74) Representative: DREISS Patentanwälte PartG mbB
(86) International application number: PCT/CN2020/121499
(87) International publication number: WO 2022/000859

(56) References cited:
- EP-A1- 2 642 382
- CN-A- 105 161 106
- CN-A- 108 146 443
- CN-A- 111 061 453
- CN-A- 111 768 780
- US-A1- 2014 207 461
- US-A1- 2020 057 604

## Description

### TECHNICAL FIELD

The present disclosure relates to the field of speech recognition technologies, and more particularly, to a voice control method, an information processing method, a vehicle, a server, and a computer-readable storage medium.

### BACKGROUND

With the development of artificial intelligence technologies, since a voice intelligent platform or a voice assistant can recognize voice input of a user and generate corresponding operation instructions under certain conditions, operations performed by the user on a device of a vehicle, e.g., a central control display screen of the vehicle, can be greatly facilitated, such that the voice intelligent platform or the voice assistant is widely used. However, in the related art, the voice assistant has strict requirements for the voice input of the user corresponding to a recognizable voice instruction, and thus has a low level of intelligence. EP 2642382 A1 provides a method of enabling voice input for a graphical user interface (GUI) based application on an electronic device. US 2020/057604 A1 discloses a GUI voice control apparatus and method, for improving the speed and accuracy of voice recognition by matching a voice signal transmitted in real time with a command pattern without an end point detection process.

### SUMMARY

Aspects of the disclosure provide an information processing method performed by a server, a server and a non-volatile computer-readable storage medium as defined in the independent claims. Preferred embodiments are defined in the dependent claim.

### BRIEF DESCRIPTION OF DRAWINGS

The above and/or additional aspects and advantages of the present disclosure will become more apparent and more understandable from the following description of embodiments taken in conjunction with the accompanying drawings, in which:
FIG. 1 is a flowchart illustrating a voice control method according to some embodiments of the present disclosure;
FIG. 2 is a block diagram illustrating modules of a vehicle according to some embodiments of the present disclosure;
FIG. 3 is a flowchart illustrating a voice control method according to some embodiments of the present disclosure;
FIG. 4 is a flowchart illustrating a voice control method according to some embodiments of the present disclosure;
FIG. 5 is a schematic diagram illustrating a structure of a voice interaction element according to some embodiments of the present disclosure;
FIG. 6 is a schematic diagram illustrating a mapping relationship between voice interaction elements and GUI controls according to some embodiments of the present disclosure;
FIG. 7 is a schematic diagram illustrating a directed graph of voice interaction information according to some embodiments of the present disclosure;
FIG. 8 is a flowchart illustrating a voice control method according to some embodiments of the present disclosure;
FIG. 9 is a flowchart illustrating an information processing method according to some embodiments of the present disclosure;
FIG. 10 is a block diagram showing modules of a server according to some embodiments of the present disclosure;
FIG. 11 is a flowchart illustrating an information processing method according to some embodiments of the present disclosure;
FIG. 12 is a flowchart illustrating an information processing method according to some embodiments of the present disclosure;
FIG. 13 is a schematic diagram illustrating a scenario of an information processing method according to some embodiments of the present disclosure;
FIG. 14 is a schematic diagram illustrating a structure of a voice event according to some embodiments of the present disclosure; and
FIG. 15 is a schematic diagram illustrating a voice interaction scenario according to some embodiments of the present disclosure.

### DESCRIPTION OF EMBODIMENTS

The embodiments of the present disclosure will be described in detail below with reference to examples thereof as illustrated in the accompanying drawings, throughout which same or similar elements are denoted by same or similar reference numerals. The embodiments described below with reference to the drawings are illustrative only, and are intended to explain, rather than limiting, the present disclosure.

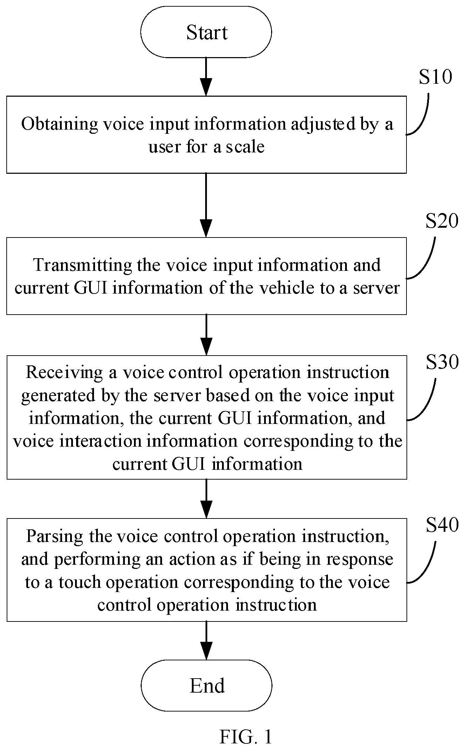

Referring to FIG. 1, the present disclosure provides a voice control method of a vehicle. The voice control method for the vehicle includes the following.

At step S10, voice input information is obtained.

At step S20, current GUI information of the vehicle and the voice input information are transmitted to a server.

At step S30, a voice control operation instruction generated by the server based on the voice input information, the current GUI information, and voice interaction information corresponding to the current GUI information is received.

At step S40, the voice control operation instruction is parsed, and an action is performed as if being in response to a touch operation corresponding to the voice control operation instruction.

An embodiment of the present disclosure provides a vehicle. The vehicle includes a display region, an electroacoustic component, a communication component, and a processor. The display region of the vehicle can include an instrument screen, an on-board display region screen, and a head-up display that can be realized on a windshield of the vehicle. An on-board system running on the vehicle uses a Graphical User Interface (GUI) to present displayed content to a user. The display region includes a number of UI elements. Different display regions can display the same or different UI elements. An UI element may include a card object, an application icon or interface, a folder icon, a multimedia file icon, and an operable control for interaction. The electroacoustic component is configured to obtain voice input information. The communication component is configured to transmit the current GUI information of the vehicle and the voice input information to the server, and receive an operation instruction generated by the server based on the voice input information, the GUI information, and the voice interaction information corresponding to the GUI information. The processor is configured to parse the voice control operation instruction, and perform an action as if being in response to a touch operation corresponding to the voice control operation instruction.

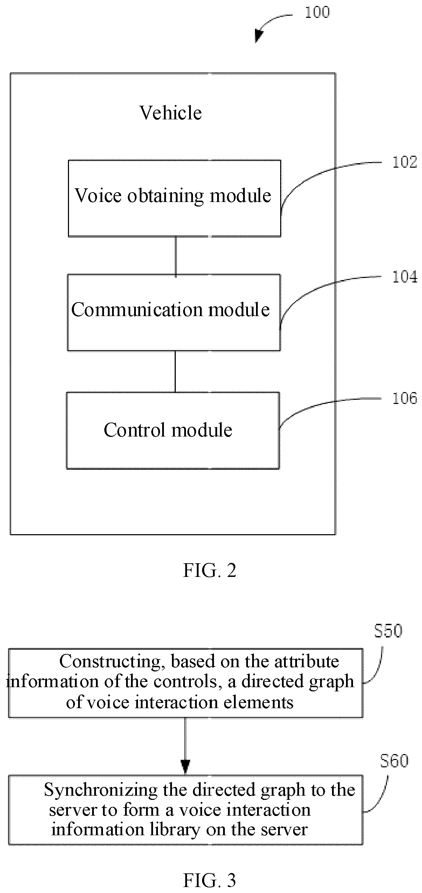

Referring to FIG. 2, an embodiment of the present disclosure also provides a vehicle 100. The voice control method according to an embodiment of the present disclosure can be implemented by the vehicle 100 according to an embodiment of the present disclosure.

Specifically, the vehicle 100 includes a voice obtaining module 102, a communication module 104, and a control module 106. Step S10 may be implemented by the voice obtaining module 102. Step S20 and step S30 may be implemented by the communication module 104. Step S40 may be implemented by the control module 106. That is, the voice obtaining module 102 is configured to obtain voice input information. The communication module 104 is configured to transmit the voice input information and the current GUI information to a server, and receive an operation instruction generated by the server based on the voice input information, the GUI information, and voice interaction information corresponding to the GUI information. The control module 106 is configured to parse the voice control operation instruction, and perform an action as if being in response to a touch operation corresponding to the voice control operation instruction.

In the voice control method for the vehicle 100 and the vehicle 100 according to an embodiment of the present disclosure, in a process of performing voice control, the semantic understanding is performed on the voice input information in combination with the current GUI information of the vehicle, such that a voice assistant's ability on sematic understanding is improved, and elements in the GUI can be operated by voice, thereby providing a user with a more convenient way of interaction, a higher level of intelligence, and better user experience.

Specifically, an intelligent display region of the vehicle can provide the user with a convenient access to control the vehicle and interact with the vehicle. Adding the voice assistant to an on-board operating system can easily generate a corresponding control instruction by recognizing voice under certain conditions, and further provide convenience for the user's interaction with the vehicle. However, voice interaction that the voice assistant can perform is limited for a reason that normally, the voice assistant can only interact with a predetermined operation target. For a non-predetermined operation target, the voice assistant cannot understand a real purpose of the user. The user can only interact with an operation target by inputting the operation target in the GUI, but cannot realize an interaction through voice. For a scenario where the user is in a driving mode, there are certain safety risks for the user to perform an interaction through the GUI while driving.

In an embodiment, after waking up the voice assistant, the user inputs voice information. The GUI information of the on-board system or application currently running in a vehicle system is obtained while the voice information is obtained. The GUI information includes layout information of elements in a current GUI, such as controls included in the current GUI, a type and a position of each control, and an association relationship between different controls.

Further, the vehicle transmits the voice input information and GUI information collected locally to a server in the cloud. The server may get, based on graphical interface information, the GUI that interacts with the user and related content in the interface, thereby using the GUI information as auxiliary information to parse the voice input information, and to generate an operation instruction. The operation instruction is transmitted back to a local vehicle. The vehicle executes a corresponding operation based on the operation instruction.

Parsing the voice input information usually includes two parts: speech recognition and semantic understanding. The speech recognition can be done locally. For example, voice information can be recognized through a text-speech conversion module of the vehicle to convert voice into a text. Of course, speech recognition can also be performed on the server, thereby reducing a processing burden of the vehicle. The semantic understanding can be done on the server.

It can be understood that, the current GUI information allows that when the server performs the semantic understanding, as seen by the user, content contained in the current GUI of the vehicle can be more clearly defined. During the voice interaction, similar to the interaction performed by the user with the GUI, any interaction that can be implemented in the GUI can make a target object clear through the semantic understanding, such that the user's original interaction with the GUI can be performed by voice.

The voice interaction information corresponding to the current GUI information is semantically understandable description information that is stored in the server and corresponds to the GUI seen by the user. With the voice interaction information, the server may establish correspondence between the voice input information and elements in the GUI, thereby generating a corresponding voice control operation instruction. In an actual operation, the server stores voice interaction information corresponding to different GUIs therein. After the current GUI information uploaded by the vehicle is received, the server can confirm, after searching and matching, the voice interaction information corresponding to the current GUI information. Further, the semantic understanding on the voice input information may be performed based on the voice interaction information, so as to generate a corresponding voice control operation instruction.

In an example, the server stores the voice interaction information corresponding to the GUI information in different scenarios, such as the voice interaction information corresponding to the GUI information of an information point card, the voice interaction information corresponding to the GUI information of an on-board system menu, and the like. A current user performs the voice interaction with the information point card. The vehicle performs searching and matching on the received voice input information of the user and the GUI information of the information point card. In response to confirming that the user is currently performing the voice interaction with the information point card, the server performs the semantic understanding on the voice input information based on the corresponding voice interaction information, confirms the target object and an operation intention of the voice interaction, and generates the voice control operation instruction.

The vehicle receives the voice operation instruction returned by the server for parsing, so as to locate the target object of an operation, and then implement an operation on the target object in the same operation manner and operation parameter as the touch operation.

In an embodiment, the current GUI information includes attribute information of controls in the current GUI of the vehicle.

Specifically, the current GUI information takes each control in the GUI as a unit. The information includes related attributes of the control, such as a control identifier, a control type, text description, an operation manner supported by the control, an operation parameter, positions and a layout relationship of a plurality of controls in the interface, and the like.

The control identifier can be used to identify each element in the current GUI. Each element has a unique identifier. Each element is content displayed in the current GUI. Taking an interface of the information point card as an example, elements in the interface of the information point card include an information point name, an address, favorites, exploring nearby, a navigation route, and the like.

The text description refers to an expression manner of the element in the GUI. For example, the text description for a favorites control is "favorites."

The control type refers to an element displaying type of the element in the GUI, such as a text, a button, a radio button, a check box, a slider, a tab, a list, and the like.

The operation manner supported by the control is an operation that a corresponding type of control can perform. For example, a related operation is not supported by the text; an operation supported by the button is clicking; operations supported by the radio button are ON and OFF; an operation supported by the check box is clicking; an operation supported by the slider is evaluation; an operation supported by the tab is selection; an operation supported by the list is scrolling; and the like.

The operation parameter corresponds to a degree of an operating mode. For example, operation parameters corresponding to a click are a short press or a long press, and operation parameters corresponding to the slider are high, medium, and low, etc.

The positions and the layout relationship of the plurality of controls in the interface reflect layout information of related elements in the GUI, which is equivalent to providing visual information for the server, such that the server can obtain the GUI seen by the user.

Based on the above information, the server can get the GUI currently seen by the user and the information of various elements that make up the interface in the cloud. In this way, the server can clarify, based on the GUI information reported by the vehicle 100, a current interaction scenario of the user, match corresponding voice interaction information, accurately understand a real intention of the voice input information of the user, and locate the voice input information to a relevant element in the GUI, thereby generating a corresponding operation instruction.

Referring to FIG. 3, in some embodiments, a voice control method includes the following.

At step S50, a directed graph of voice interaction elements is constructed based on attribute information of controls.

At step S60, the directed graph is synchronized to the server to form a voice interaction information library on the server.

In some embodiments, step S50 may be implemented by the control module 106, and step S60 may be implemented by the communication module 104. That is, the control module 106 is configured to construct, based on the attribute information of controls, a directed graph of voice interaction elements. The communication module 104 is configured to synchronize the directed graph to the server to form a voice interaction information library on the server.

In some embodiments, the processor is configured to construct, based on the attribute information of controls, a directed graph of voice interaction elements. The communication component is configured to synchronize the directed graph to the server to form a voice interaction information library on the server.

Specifically, the directed graph can be used to describe a structure relationship of an interface layout between elements. In an embodiment, a node in the directed graph of the voice interaction elements represents a control in the GUI, and an edge in the directed graph represents an inclusion relationship of each control on the layout. In this way, constructing the GUI as the directed graph of the voice interaction elements can completely retain layout information of the GUI and operation information of the controls.

In an actual operation process, after the GUI is rendered, a system traverses a hierarchical view of the controls, constructs the directed graph of the voice interaction elements corresponding to the current GUI, and reports the directed graph to the server. When the GUI is updated, or after a new GUI is rendered, the system traverses the hierarchical view of the controls again, obtains a changed control, and updates a corresponding part of the directed graph and reports the corresponding part to the server.

After receiving the directed graph, the server performs storage and related information management. The directed graphs corresponding to different GUIs form the voice interaction information library. Each piece of voice interaction information in the voice interaction information library corresponds to one GUI.

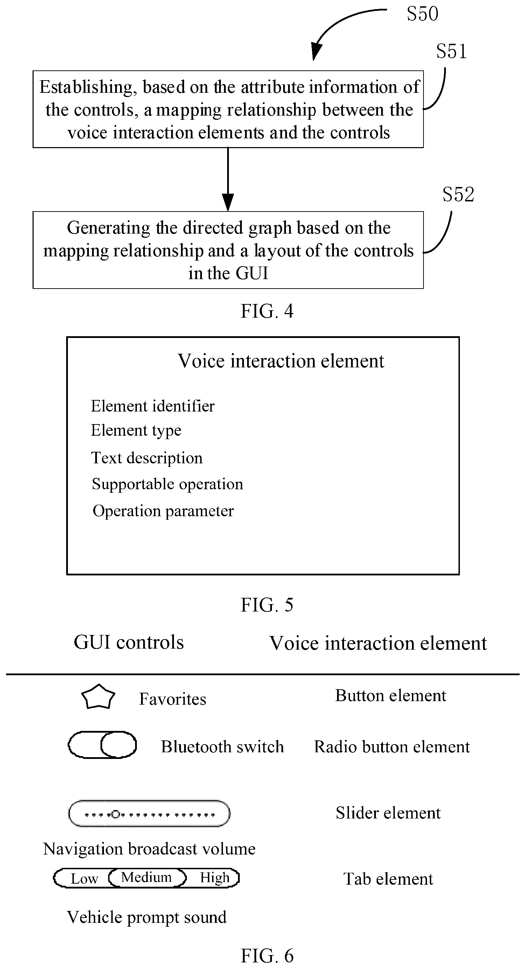

Referring to FIG. 4, in some embodiments, step S50 includes the following.

At step S51, a mapping relationship between the voice interaction elements and the controls is established based on the attribute information of controls.

At step S52, the directed graph is generated based on the mapping relationship and a layout relationship of the controls in the GUI.

In some embodiments, step S51 and step S52 can be implemented by the control module 106. In other words, the control module 106 is configured to establish, based on the attribute information of controls, a mapping relationship between the voice interaction elements and the controls, that is, generate the directed graph based on the mapping relationship and a layout relationship of the controls in the GUI.

In some embodiments, the processor is configured to establish, based on the attribute information of controls, a mapping relationship between the voice interaction elements and the controls, that is, generate the directed graph based on the mapping relationship and a layout relationship of the controls in the GUI.

**In** some embodiments, each of the voice interaction elements includes an element identifier, an element attribute, and an element supportable operation.

Specifically, referring to FIG. 5, the element identifier of the voice interaction element corresponds to the control identifier of the control in the GUI, such that the control in the GUI is associated to the voice interaction element.

An element attribute includes an element type, text description, and the like. The element type is used to record an attribute of a control in the GUI corresponding to the voice interaction element, such as a text, a button, a radio button, a check box, a slider, a tab, a list, and the like. The text description is used to record an expression manner of the control in the GUI corresponding to the voice interaction element, such as "favorites", "exploring nearby", "vehicle prompt sound", etc.

The element supportable operation includes an operation manner and an operation parameter. The operation manner is used to record an operation manner supported by the control in the GUI corresponding to the voice interaction element, such as clicking, evaluation and other operation manners. The operation parameter is used to record a degree of a control supportable operation in the GUI corresponding to the voice interaction element, such as long press, short press, etc.

**In** this way, referring to FIG. 6, mapping between the controls in the GUI and the voice interaction elements can be formed based on the attribute information of the controls. For example, in the GUI of the system menu of the vehicle, a "Bluetooth switch" control is mapped to a radio button element in the voice interaction elements, a "navigation broadcast volume" control is mapped to a slider element in the voice interaction elements, and a "vehicle prompt sound" control is mapped to a tab element in the voice interaction elements.

The voice interaction information includes the voice interaction element. For example, the "navigation broadcast volume" control is mapped to the voice interaction element, of which the element identifier is N, the element type is the slider element, the text description is the "navigation broadcast volume", and the operation parameter is volume 30.

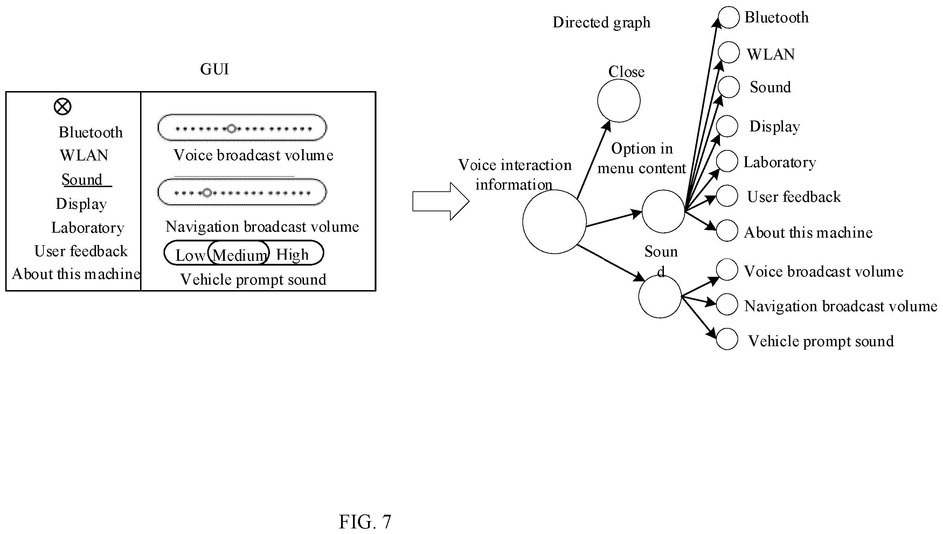

Referring to FIG. 7, the voice interaction elements mapped by different controls in the current GUI jointly form the voice interaction information corresponding to the GUI information.

Further, each voice interaction element is determined as a node. Inclusion relationships of the voice interaction elements are obtained based on the layout relationship of respective controls in the GUI. Each inclusion relationship is determined as an edge to form the directed graph of the voice interaction elements. For example, for the system menu, an upper close control corresponds to a node, an option in menu content corresponds to a node, and a sound option interface being displayed corresponds to a node. Further, nodes of options in the menu content include sub-nodes such as Bluetooth, a Wireless Local Area Network (WLAN), sound, display, a laboratory, user feedback, and about this machine, and sound nodes include sub-nodes such as a voice broadcast volume, the navigation broadcast volume, and the vehicle prompt sound.

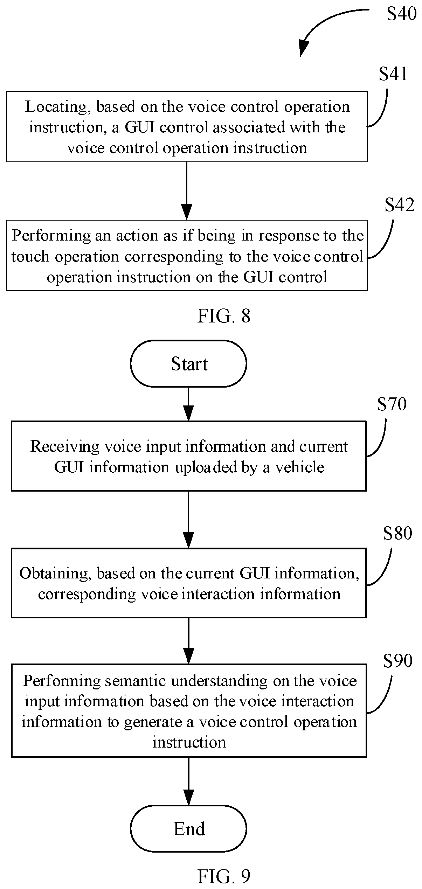

Referring to FIG. 8, in some embodiments, step S40 includes the following.

At step S41, a GUI control associated with the voice control operation instruction is located based on the voice control operation instruction.

At step S42, an action is performed as if being in response to the touch operation corresponding to the voice control operation instruction on the GUI control.

In some embodiments, step S41 and step S42 can be implemented by the control module 106. That is, the control module 106 is configured to locate, based on the voice control operation instruction, a GUI control associated with the voice control operation instruction, and perform the action as if being in response to the touch operation corresponding to the voice control operation instruction on the GUI control.

In some embodiments, the processor is configured to locate, based on the voice control operation instruction, a GUI control associated with the voice control operation instruction, and perform the action as if being in response to the touch operation corresponding to the voice control operation instruction on the GUI control.

Specifically, the server performs the semantic understanding on the voice input information based on the voice interaction information, generates the voice control operation instruction, and transmits the voice control operation instruction back to the vehicle. The vehicle locates, based on the voice control operation instruction, a target control that needs to be operated, and performs the action as if being in response to the touch operation corresponding to the voice control operation instruction on the target control.

In some embodiments, the voice control method further includes controlling execution feedback of a broadcast operation of the vehicle.

Specifically, the server generates feedback information related to an execution of the operation instruction while generating the operation instruction. After receiving the operation instruction and the feedback information, the vehicle broadcasts the execution feedback of an operation while executing the operation instruction. A broadcast manner can be that an execution result is fed back to the user by voice, e.g., "successful connection". In addition, the broadcast manner can also be to use the display region to give the user feedback on an execution operation in a form of a prompt text or a pop-up window. In this way, it is convenient for the user to get an execution status of the voice input instruction through the execution feedback, so as to perform subsequent actions.

Referring to FIG. 9, the present disclosure also provides an information processing method for processing the voice input information and the GUI information transmitted by the vehicle to the server in the above embodiments. The information processing method includes the following.

At step S70, voice input information and current GUI information uploaded by a vehicle are received.

At step S80, corresponding voice interaction information is obtained based on the current GUI information.

At step S90, semantic understanding is performed on the voice input information based on the voice interaction information to generate a voice control operation instruction.

An embodiment of the present disclosure provides a server. The server includes the communication component and the processor. The communication component is configured to receive voice input information and current GUI information uploaded by a vehicle. The processor is configured to obtain, based on the current GUI information, corresponding voice interaction information, and perform semantic understanding on the voice input information based on the voice interaction information to generate a voice control operation instruction.

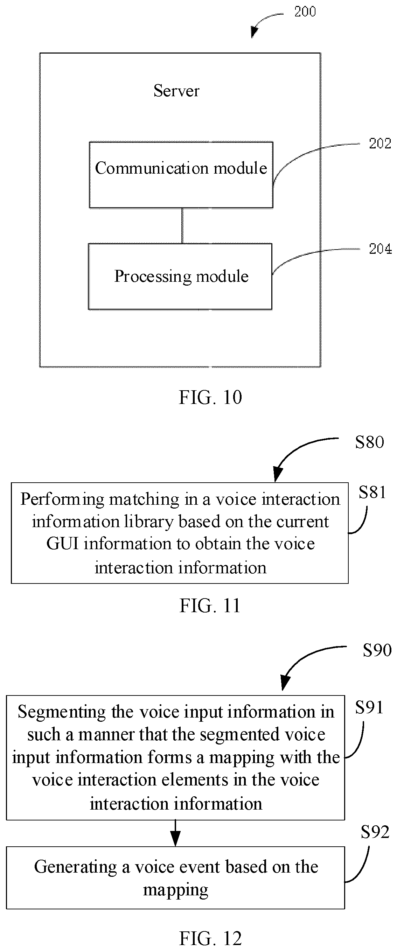

Referring to FIG. 10, an embodiment of the present disclosure further provides a server 200. The information processing method according to an embodiment of the present disclosure can be implemented by the server 200 according to an embodiment of the present disclosure.

Specifically, the server 200 includes a communication module 202 and a processing module 204. Step S70 can be implemented by the communication module 202. Step S80 and step S90 can be implemented by the processing module 204. That is, the communication module 202 is configured to receive voice input information and current GUI information uploaded by a vehicle. The processing module 204 is configured to obtain, based on the current GUI information, corresponding voice interaction information, and parse, based on the voice interaction information, a semantic meaning of the voice input information to generate a voice control operation instruction.

The server according to an embodiment communicates with the vehicle. In a process of performing the voice control, a semantic meaning of the voice input information is parsed in combination with the current GUI information of the vehicle, such that a voice assistant's ability on sematic understanding is improved, and elements in the GUI can be operated by voice, thereby providing the user with a more convenient way of interaction, a higher level of intelligence, and better user experience.

The directed graphs corresponding to different GUIs are reported to the server to form the voice interaction information library. Each piece of voice interaction information in the voice interaction information library corresponds to one GUI.

In an actual operation, after the server receives the current GUI information uploaded by the vehicle, matched voice interaction information may be found from the voice interaction information library based on the GUI information. The voice input information is segmented based on corresponding voice interaction information in such a manner that the voice input information is associated with the voice interaction element to generate the voice control operation instruction. The voice control operation instruction includes information of the voice interaction element, so as to be able to establish a connection with the control in the GUI.

Referring to FIG. 11, in some embodiments, step S80 includes the following.

At step S81, matching is performed in a voice interaction information library based on the current GUI information to obtain the voice interaction information. The voice interaction information includes voice interaction elements.

In some embodiments, step S81 may be implemented by the processing module 204. That is, the processing module 204 is configured to perform matching in a voice interaction information library based on the current GUI information to obtain the voice interaction information.

In some embodiments, the processor is configured to perform matching in a voice interaction information library based on the current GUI information to obtain the voice interaction information.

Specifically, after the directed graph of each GUI of the vehicle is established, the directed graph is uploaded to the server, thereby forming the voice interaction information library on the server. In subsequent use, after the current GUI information uploaded by the vehicle is received, searching may be performed in the voice interaction information library based on the control identifier. It can be understood that, the control in the current GUI establishes mapping with the voice interaction element based on the attribute information, such that the voice interaction element having the same identifier can be searched for based on the control identifier. The voice interaction information includes the voice interaction elements that are mapped and associated with respective controls in the current GUI, such that the voice interaction information corresponding to the current GUI can be determined.

Referring to FIG. 12, in an embodiment, step S90 includes the following.

At step S91, the voice input information is segmented in such a manner that the segmented voice input information forms mapping with the voice interaction elements in the voice interaction information.

At step S92, a voice event is generated based on the mapping. The voice control operation instruction includes the voice event.

In some embodiments, step S91 and step S92 can be implemented by the processing module 204. That is, the processing module 204 is configured to segment the voice input information in such a manner that the segmented voice input information forms mapping with the voice interaction elements in the voice interaction information, and generate a voice event based on the mapping.

In some embodiments, the processor is configured to segment the voice input information in such a manner that the segmented voice input information forms mapping with the voice interaction elements in the voice interaction information, and generate a voice event based on the mapping.

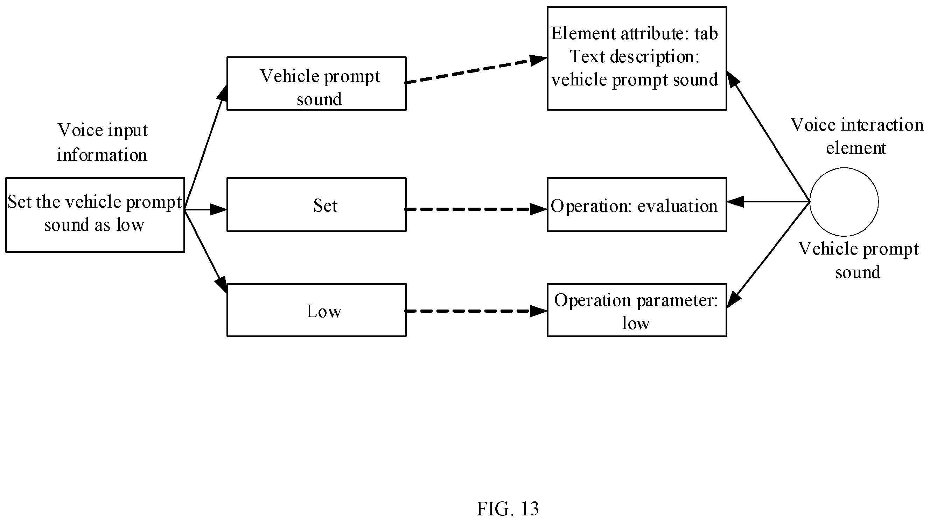

Specifically, referring to FIG. 13, semantic segmenting may be performed on the voice input information based on natural voice comprehension. The voice input information may be segmented into an entity and an operation intention. The entity refers to the target object, and the operation intention refers to an operation and an operation parameter that are expected to be performed on the target object. For example, after the voice input information "set the vehicle prompt sound as low" is segmented, it is determined that the entity is "vehicle prompt sound", the operation is "set", and the operation parameter is "low".

Also, the server makes a comparison in the voice interaction information library based on the uploaded current GUI, and obtains that the voice interaction information corresponds to the GUI of a sound setting in the system menu. The voice interaction information includes all voice interaction elements corresponding to the controls in the GUI. In an example, an inverted index can be generated based on, for example, the text description or the element identifier, of the voice interaction element. The entity in the voice input information is matched with voice interaction element information in the inverted index to quickly determine the target object in the voice input information.

After the voice interaction element is determined, an operation that is expected to be performed on the target object in the voice input information can be determined based on the element attribute and a supportable operation of the voice interaction element.

In the above example, after matching, it is confirmed that the entity "vehicle prompt sound" in the voice input information forms mapping with the voice interaction element "vehicle prompt sound". The element type of the voice interaction element "vehicle prompt sound" is the tab, the supportable operation is selection, and operation parameters are high, medium, and low. The operation "set" in the voice input information forms mapping with "select". The operation parameter "low" in the voice input information forms mapping with "low".

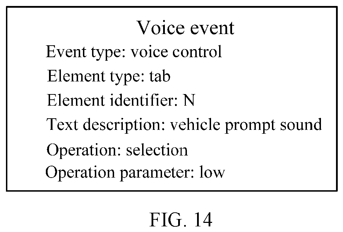

Referring to FIG. 14, a voice event corresponding to the voice input information can be generated based on the above mapping. The voice event includes an event type: voice control, the element type: tab, the element identifier, the text description: vehicle prompt sound, operation: selection, and the operation parameter: low.

The voice event forms the voice control operation instruction and is issued to the vehicle. The vehicle locates the target control that needs to be operated in the GUI based on the element identifier and the text description in the voice control operation instruction, and performs a corresponding operation on the target control based on the supportable operation and the operation parameter.

In the above example, an operation instruction to set a vehicle volume as low is generated based on the voice event and is issued to the vehicle. The vehicle locates, based on the element identifier and the text description in the voice event, that the target object is the "vehicle prompt sound" control, the operation is selection, and the operation parameter is low. Further, the vehicle performs a corresponding operation and sets the volume of the vehicle prompt sound to be low.

In some embodiments, the information processing method further includes receiving input labeling information to generalize the voice interaction elements.

It may be understood that, the text description, the supportable operation, and the operation parameter in the voice interaction element is generated based on a related standard, which are poor in interpretability. Also, different users' expressions of the same intention or the same user's expressions of the same intention at different time may be different. Therefore, after a certain amount of voice input information is collected, a text description manner, the supportable operation, and an expression manner of the operation parameter of the voice interaction element can be labeled manually and generalized. A generalized voice interaction element is associated with more expression manners, thereby better assisting in parsing the voice input information.

For example, an operation instruction supported by the button can be generalized to, for example, clicking, pressing, and the like. An operation instruction that can be supported by the radio button can be generalized to opening, closing, and the like. The text description of "vehicle prompt sound" can be generalized into "prompt sound", "vehicle prompt volume", and the like.

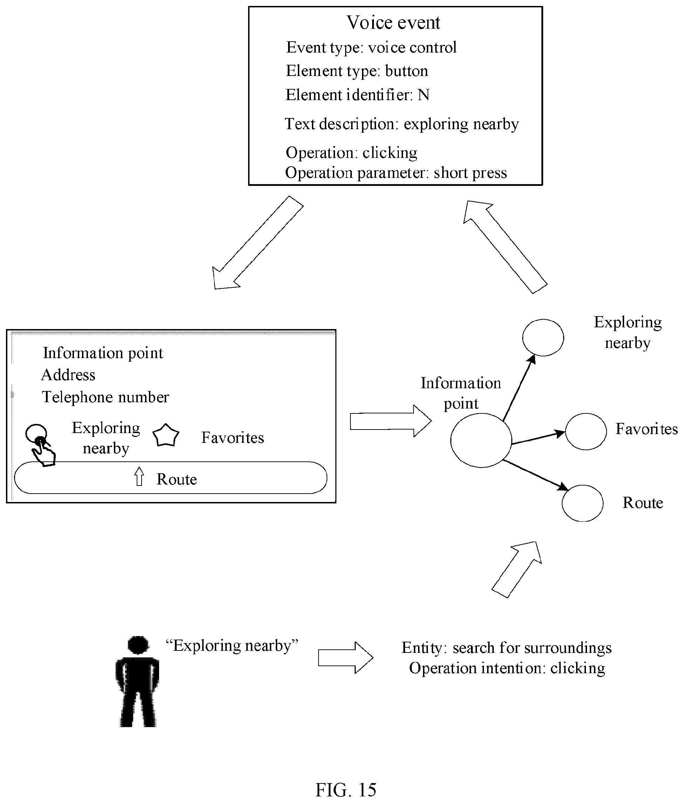

Referring to FIG. 15, voice interaction between the vehicle and the server is illustrated below with an interaction example.

The user wakes up the voice assistant on the GUI of the information point card, and issues the voice instruction of "exploring nearby". The vehicle transmits both the GUI information and the voice input information to the server. After the server receives the graphical user information, the voice interaction information of the GUI of the corresponding information point card is obtained by performing matching in the voice interaction information library based on the attribute information of the control, such as the control identifier, and related information of the voice interaction element in the voice interaction information is obtained. Further, the server segments the received voice input information, and matches segmented parts with the voice interaction elements to form mapping. The target object of the voice input information is the "exploring nearby" control. The element type of the "exploring nearby" control is the button. The supportable operation is clicking. The operation parameter is short press. Further, the voice event is generated based on the formed mapping, and the voice control operation instruction forming the voice event is issued to the vehicle. After the vehicle receives the voice control operation instruction, it is located that the target object is the "exploring nearby" control based on the related information of the voice event. Therefore, the voice control is completed by performing the action as if being in response to the touch operation.

In this way, when the user implements the voice control through the vehicle, in the process of performing the voice control, the semantic understanding is performed on the voice input information in combination with the current GUI information of the vehicle, such that the voice assistant's ability on sematic understanding is improved, and the elements in the GUI can be operated by voice, thereby providing the user with a more convenient way of interaction, a higher level of intelligence, and better user experience.

An embodiment of the present disclosure also provides a computer-readable storage medium. One or more non-volatile computer-readable storage media including computer-executable instructions, when the computer-executable instructions are executed by one or more processors, cause the one or more processors to perform the voice control method for the vehicle or the information processing method according to any of the above embodiments.

It can be understood by those skilled in the art that all or part of the processes of the method in the above embodiments can be implemented by relevant hardware instructed by a computer program. The program can be stored in a non-volatile computer-readable storage medium. When the program is executed, processes of the method in the above embodiments can be included. The storage medium may be a magnetic disk, an optical disc, a Read-Only Memory (ROM), or the like.

The above embodiments illustrate merely some implementations of the present disclosure, which are described in details but are not construed to limit the scope of the present disclosure. It should be pointed that, for those skilled in the art, without departing from the concept of the present disclosure, various changes and improvements may be made, which are covered by the protection scope of the present disclosure. Therefore, the protection scope of the present disclosure shall be subject to the appended claims.

## Claims

1. An information processing method performed by a server (200), the method comprising:
receiving, from a vehicle (100), directed graphs corresponding to different Graphical User Interfaces, GUIs, to form a voice interaction information library on the server, wherein each of the directed graphs is a directed graph of voice interaction elements, wherein a node in the directed graph represents a control in a respective GUI and an edge in the directed graph represents an inclusion relationship of each control on a layout of the GUI;
receiving (S70) voice input information and current GUI information uploaded by the vehicle;
obtaining (S80), based on the current GUI information, corresponding voice interaction information by performing matching (S81) in the voice interaction information library based on the current GUI information, the voice interaction information comprising the voice interaction elements;
performing semantic understanding (S90) on the voice input information based on the voice interaction information to generate a voice control operation instruction; and
returning the generated voice control operation instruction to the vehicle.

2. The information processing method according to claim 1, wherein said performing semantic understanding on the voice input information based on the voice interaction information to generate the voice control operation instruction comprises:
segmenting (S91) the voice input information in such a manner that the segmented voice input information forms a mapping with the voice interaction elements in the voice interaction information; and
generating (S92) a voice event based on the mapping, wherein the voice control operation instruction comprises the voice event.

3. A server (200), comprising:
- a communication module (202) configured to:
receive, from a vehicle (100), directed graphs corresponding to different GUIs to form a voice interaction information library on the server, wherein each of the directed graphs is
a directed graph of voice interaction elements, wherein a node in the directed graph represents a control in a respective GUI and an edge in the directed graph represents an inclusion relationship of each control on a layout of the GUI; and
receive (S70) voice input information and current Graphical User Interface (GUI) information uploaded by the vehicle; and
- a processing module (204) configured to:
obtain (S80), based on the current GUI information, corresponding voice interaction information by performing matching (S81) in the voice interaction information library based on the current GUI information, the voice interaction information comprising the voice interaction elements;
perform semantic understanding (S90) on the voice input information based on the voice interaction information to generate a voice control operation instruction; and
return the generated voice control operation instruction to the vehicle.

4. A non-volatile computer-readable storage medium of computer-executable instructions, the computer-executable instructions, when executed by one or more processors, causing the one or more processors to perform the information processing method according to claim 1 or 2.

## Patentansprüche

1. Informationsverarbeitungsverfahren, das von einem Server (200) ausgeführt wird, wobei das Verfahren umfasst:
Empfangen, von einem Fahrzeug (100), gerichteter Graphen, die verschiedenen grafischen Benutzerschnittstellen, GUIs, entsprechen, um eine Sprachinteraktionsinformationsbibliothek auf dem Server zu bilden, wobei jeder der gerichteten Graphen ein gerichteter Graph von Sprachelementen der Interaktion ist, wobei ein Knoten in dem gerichteten Graphen ein Steuerelement in einer jeweiligen GUI darstellt und eine Kante in dem gerichteten Graphen eine Inklusionsbeziehung jedes Steuerelements auf einem Layout der GUI repräsentiert;
Erhalten (S70) von Spracheingabeinformationen und aktuellen GUI-Informationen, die durch das Fahrzeug hochgeladen wurden;
Erhalten (S80), basierend auf den aktuellen GUI-Informationen, entsprechende Sprachinteraktionsinformationen durch Durchführen eines Abgleichs (S81) in der Sprachinteraktionsinformationsbibliothek basierend auf den aktuellen GUI-Informationen, wobei die Sprachinteraktionsinformationen die Sprachinteraktionselemente umfassen;
Durchführen eines semantischen Verstehens (S90) der Spracheingabeinformationen basierend auf den Sprachinteraktionsinformationen, um eine Sprachsteuerungs-Operationsanweisung zu erzeugen; und
Zurücksenden der erzeugten Sprachsteuerungs-Operationsanweisung an das Fahrzeug.

2. Verfahren nach Anspruch 1, wobei das Durchführen eines semantischen Verstehens der Spracheingabeinformationen basierend auf den Sprachinteraktionsinformationen, um eine Sprachsteuerungs-Operationsanweisung zu erzeugen, umfasst:
Segmentieren (S91) der Spracheingabeinformationen derart, dass die segmentierten Spracheingabeinformationen eine Abbildung mit den Sprachinteraktionselementen in den Sprachinteraktionsinformationen bilden; und
Erzeugen (S92) eines Sprach-Ereignisses basierend auf der Abbildung, wobei die Sprachsteuerungs-Operationsanweisung das Sprach-Ereignis umfasst.

3. Server (200), umfassend:
- ein Kommunikationsmodul (202), das konfiguriert ist zum:
Empfangen, von einem Fahrzeug (100), gerichteter Graphen, die verschiedenen GUIs entsprechen, um eine Sprachinteraktionsinformationsbibliothek auf dem Server zu bilden, wobei jeder der gerichteten Graphen ein gerichteter Graph von Sprachelementen der Interaktion ist, wobei ein Knoten in dem gerichteten Graphen ein Steuerelement in einer jeweiligen GUI darstellt und eine Kante in dem gerichteten Graphen eine Inklusionsbeziehung jedes Steuerelements auf einem Layout der GUI repräsentiert; und
Erhalten (S70) von Spracheingabeinformationen und aktuellen GUI-Informationen, die durch das Fahrzeug hochgeladen wurden; und
- ein Verarbeitungsmodul (204), das konfiguriert ist zum:
Erhalten (S80), basierend auf den aktuellen GUI-Informationen, entsprechende Sprachinteraktionsinformationen durch Durchführen eines Abgleichs (S81) in der Sprachinteraktionsinformationsbibliothek basierend auf den aktuellen GUI-Informationen, wobei die Sprachinteraktionsinformationen die Sprachinteraktionselemente umfassen;
Durchführen eines semantischen Verstehens (S90) der Spracheingabeinformationen basierend auf den Sprachinteraktionsinformationen, um eine Sprachsteuerungs-Operationsanweisung zu erzeugen; und
Zurücksenden der erzeugten Sprachsteuerungs-Operationsanweisung an das Fahrzeug.

4. Nichtflüchtiges computerlesbares Speichermedium mit computerausführbaren Anweisungen, wobei die computerausführbaren Anweisungen, wenn sie durch einen oder mehrere Prozessoren ausgeführt werden, den einen oder die mehreren Prozessoren veranlassen, das Informationsverarbeitungsverfahren nach Anspruch 1 oder 2 durchzuführen.

## Revendications

1. Un procédé de traitement d'informations réalisé par un serveur (200), le procédé comprenant :
recevoir, en provenance d'un véhicule (100),
des graphes orientés correspondant à différentes Interfaces Utilisateur Graphiques (IUG) pour former une bibliothèque d'informations d'interaction vocale sur le serveur, dans lequel chacun des graphes orientés est un graphe orienté d'éléments d'interaction vocale, dans lequel un nœud dans le graphe orienté représente un contrôle dans une IUG respective et une arête dans le graphe orienté représente une relation d'inclusion de chaque contrôle dans la mise en page de l'IUG ;
recevoir (S70) des informations d'entrée vocale et des informations IUG actuelles téléversées par le véhicule ;
obtenir (S80),
sur la base des informations IUG actuelles, des informations d'interaction vocale correspondantes en effectuant une mise en correspondance (S81) dans la bibliothèque d'informations d'interaction vocale selon les informations IUG actuelles, les informations d'interaction vocale comprenant les éléments d'interaction vocale ;
effectuer une compréhension sémantique (S90) sur les informations d'entrée vocale selon les informations d'interaction vocale pour générer une instruction d'opération de commande vocale ; et
retourner l'instruction d'opération de commande vocale générée au véhicule.

2. Le procédé de traitement d'informations selon la revendication 1, dans lequel ladite étape d'effectuer une compréhension sémantique sur les informations d'entrée vocale selon les informations d'interaction vocale pour générer l'instruction d'opération de commande vocale comprend :
segmenter (S91) les informations d'entrée vocale de telle manière que les informations d'entrée vocale segmentées forment un mappage avec les éléments d'interaction vocale dans les informations d'interaction vocale ; et
générer (S92) un événement vocal selon le mappage, dans lequel l'instruction d'opération de commande vocale comprend l'événement vocal.

3. Un serveur (200), comprenant :
- un module de communication (202) configuré pour :
recevoir, en provenance d'un véhicule (100),
des graphes orientés correspondant à différentes IUG pour former une bibliothèque d'informations d'interaction vocale sur le serveur, dans lequel chacun des graphes orientés est un graphe orienté d'éléments d'interaction vocale, dans lequel un nœud dans le graphe orienté représente un contrôle dans une IUG respective et une arête dans le graphe orienté représente une relation d'inclusion de chaque contrôle dans la mise en page de l'IUG ; et
recevoir (S70) des informations d'entrée vocale et des informations d'Interface Utilisateur Graphique (IUG) actuelles téléversées par le véhicule ; et
- un module de traitement (204) configuré pour :
obtenir (S80),
sur la base des informations IUG actuelles, des informations d'interaction vocale correspondantes en effectuant une mise en correspondance (S81) dans la bibliothèque d'informations d'interaction vocale selon les informations IUG actuelles, les informations d'interaction vocale comprenant les éléments d'interaction vocale ;
effectuer une compréhension sémantique (S90) sur les informations d'entrée vocale selon les informations d'interaction vocale pour générer une instruction d'opération de commande vocale ; et
retourner l'instruction d'opération de commande vocale générée au véhicule.

4. Un support de stockage non volatil lisible par ordinateur contenant des instructions exécutables par ordinateur, lesdites instructions exécutables par ordinateur, lorsqu'elles sont exécutées par un ou plusieurs processeurs, amenant le ou lesdits processeurs à mettre en œuvre le procédé de traitement d'informations selon la revendication 1 ou 2.
